# EUROPÄISCHE PATENTSCHRIFT

(11) **EP 2 824 292 B1**
(45) Veröffentlichungstag und Bekanntmachung des Hinweises auf die Patenterteilung: **20.02.2019**
(21) Anmeldenummer: 14175148.7
(22) Anmeldetag: 01.07.2014
(51) Int. Cl.: F01K 23/06, F01K 23/10

(54) **Antriebseinheit für ein Kraftfahrzeug**
Drive unit for a motor vehicle
Unité d'entraînement pour un véhicule automobile

(30) Priorität: 09.07.2013 DE 102013011520
(43) Veröffentlichungstag der Anmeldung: 14.01.2015
(73) Patentinhaber: Volkswagen Aktiengesellschaft, 38440 Wolfsburg (DE)
(72) Erfinder: Carstensen, Asmus, 38557 Osloss (DE); Semke, Artur, 38446 Wolfsburg (DE); Schulenburg, Thomas, 38550 Isenbüttel (DE); Herr, Andreas, Dr., 38442 Wolfsburg (DE); Dallmann, Marcus, 38527 Meine (DE); Käppner, Christoph, 38118 Braunschweig (DE); Fritzsche, Jörg, 38518 Gifhorn (DE); Volkmann, Jörg, Dr., 38459 Bahrdorf (DE); Maischik, Thomas, 38102 Braunschweig (DE)
(74) Vertreter: Bungartz, Florian

(56) Entgegenhaltungen:
- WO-A2-2010/048100
- DE-A1-102010 061 525
- US-A1- 2011 094 227

## Beschreibung

Die Erfindung betrifft eine Antriebseinheit für ein Kraftfahrzeug.

Kraftfahrzeuge werden derzeit regelmäßig mittels Brennkraftmaschinen angetrieben, in denen Kraftstoffe verbrannt und die dabei freigesetzte Wärmeenergie teilweise in mechanische Arbeit umgewandelt wird. Der Wirkungsgrad von Hubkolben-Brennkraftmaschinen, die für den Antrieb von Kraftfahrzeugen nahezu ausschließlich eingesetzten werden, liegt bei ca. einem Drittel der eingesetzten Primärenergie. Demnach stellt zwei Drittel der bei der Verbrennung freigesetzten Wärmeenergie Abwärme dar, die entweder über die Motorkühlung oder den Abgasstrang als Verlustwärme an die Umgebung abgegeben wird.

Eine Nutzung dieser Abwärme stellt eine Möglichkeit dar, den Gesamtwirkungsgrad einer Antriebseinheit des Kraftfahrzeugs zu steigern und damit den Kraftstoffverbrauch zu senken.

Die DE 10 2008 028 467 A1 beschreibt eine Vorrichtung zur Nutzung von Abwärme einer Brennkraftmaschine. Dazu ist in den Abgasstrang der Brennkraftmaschine ein erster Wärmetauscher, der Verdampfer, einer Dampfkreisprozessvorrichtung integriert. Die in dem Wärmetauscher von dem Abgas auf ein Arbeitsmedium der Dampfkreisprozessvorrichtung übertragene Wärmeenergie wird in einer Expansionsvorrichtung der Dampfkreisprozessvorrichtung teilweise in mechanische Energie umgewandelt, die beispielsweise zur Unterstützung des Antriebs eines Kraftfahrzeugs oder zur Erzeugung elektrischer Energie genutzt werden kann. Stromab der Expansionsvorrichtung wird das Arbeitsmedium in einem zweiten Wärmetauscher, dem Kondensator, abgekühlt, wobei es kondensiert. Über eine Speisepumpe erfolgt eine Druckerhöhung des Arbeitsmediums und dessen Zufuhr zu dem Verdampfer.

Der Kondensator wird von dem Kühlmittel eines Motorkühlkreislaufs eines Verbrennungsmotors der Brennkraftmaschine gekühlt. Der Rücklauf des Kühlmittels von dem Kondensator ist mittels eines 3-Wege-Ventils so schaltbar, dass das Kühlmittel entweder direkt vor einem Hauptkühler oder direkt vor der Verbrennungskraftmaschine in den Motorkühlkreis eingeleitet wird. Dies ermöglicht, die Abwärme, die das Kühlmittel in dem Kondensator aufnimmt, in einer Warmlaufphase der Brennkraftmaschine zur schnelleren Aufwärmung des Kühlmittels zu nutzen. Dabei ist in bekannter Weise vorgesehen, den Motorkühler durch einen Bypass zu umgehen, um eine in der Warmlaufphase ungewünschte Kühlung des Kühlmittels zu vermeiden. Durch die Nutzung der in dem Kondensator anfallenden Abwärme erreicht die Brennkraftmaschine schneller ihre Betriebstemperatur, was folglich mit einem geringen Kraftstoffverbrauch und Schadstoffausstoß während der Warmlaufphase verbunden ist. Nach dem Erreichen der Betriebstemperatur kann das durch den Kondensator aufgewärmte Kühlmittel direkt vor dem Motorkühler in den Motorkühlkreis eingeleitet werden. Dadurch kann verhindert werden, dass die Abwärme aus dem Kondensator die Kühlleistung für die Verbrennungskraftmaschine vermindert. Andererseits kann aber auch vorgesehen sein, das aus dem Kondensator austretende Kühlmittel nach dem Erreichen der Betriebstemperatur direkt vor dem Verbrennungsmotor in den Motorkühlkreis einzuleiten. Dies kann vorteilhaft sein, wenn die Motoraustrittstemperatur des Kühlmittels unter einen Sollwert abfällt, was beispielsweise bei längerer Bergabfahrt des Kraftfahrzeugs der Fall sein kann. Zusätzlich kann dann auch die Heizleistung einer Innenraumheizung, die auf einem Wärmetausch mit dem Motorkühlkreis beruht, verbessert werden.

Aus der DE 10 2008 019 ist zudem bekannt, bei einem Kraftfahrzeug, in dessen Antriebsstrang eine Dampfkreisprozessvorrichtung zur Abgasabwärmenutzung integriert ist und das zudem ein Navigationssystem aufweist, die mittels des Navigationssystems festgestellte Position des Fahrzeugs und den vorausberechneten Streckenverlauf zur wirtschaftlicheren Steuerung des Dampfkreisprozesses auszuwerten.

Weiterhin ist es bekannt, einen als Latent- oder chemischen Wärmespeicher ausgebildeten Wärmespeicher in den Motorkühlkreis zu intergieren (vgl. z.B. DE 10 2008 013 650 A1). Der Wärmespeicher nimmt im Betrieb der Brennkraftmaschine nach dem Erreichen der Betriebstemperatur Wärme aus dem Abgas auf und speichert diese zwischen. Nach einem darauffolgenden Kaltstart der Brennkraftmaschine gibt der Wärmespeicher die gespeicherte Wärme an den Motorkühlkreislauf ab, wodurch die Warmlaufphase für die Brennkraftmaschine verkürzt wird.

Bekannt ist auch, beide Maßnahmen kombiniert bei einer Brennkraftmaschine einzusetzen, wobei keine Wechselwirkung zwischen dem Dampfkreisprozess und dem Wärmespeicher vorgesehen ist. Der Einsatz des Wärmespeichers ist dabei eine reine Kaltstartmaßnahme, während der Dampfkreisprozess erst nach dem Erreichen der Betriebstemperatur genutzt wird.

Nachteilig bei diesen Systemen ist, dass sowohl der Verdampfer als auch der Wärmespeicher in den Abgasstrang integriert sind und mittels jeweils eines Bypasses umgehbar gemacht werden müssen, wenn zumindest bei ihrer Nichtnutzung die Erhöhung des Abgasgegendrucks, den der Verdampfer und der Wärmespeicher infolge ihrer Umströmung durch das Abgas erzeugen, vermieden werden soll.

Eine alternative Kombination eines Dampfkreisprozess zur Abwärmenutzung aus dem Abgas und eines Wärmespeicher ist aus der DE 10 2007 033 611 A1 bekannt. Dort ist vorgesehen, in Betriebszuständen des Verbrennungsmotors, wenn die in dem Abgas enthaltene Wärmeenergie größer ist als die Wärmeenergie, die in dem Verdampfer auf das Arbeitsmedium maximal übertragbar ist, mittels entsprechend ausgebildeter Bypässe und Ventile einen Teil des Abgasstroms in den Wärmespeicher umzuleiten, um diesen "aufzuladen", sofern er nicht bereits vollständig "aufgeladen" ist. Andererseits ist vorgesehen, in Betriebszuständen des Verbrennungsmotors, wenn die Wärmeenergie des Abgases geringer als die im Verdampfer umsetzbare Wärmeenergie ist, das Abgas vorab durch den Wärmespeicher zu führen, um dieses zu erwärmen, wodurch der Dampfkreisprozess dann besser betrieben werden kann. Damit dadurch nicht eine unzulässige Abkühlung von Abgasnachbehandlungsvorrichtungen des Abgasstrangs verbunden ist, sind sowohl der Wärmespeicher als auch der Verdampfer stromab dieser Abgasnachbehandlungsvorrichtungen in den Abgasstrang integriert.

Eine dazu funktional ähnliche Brennkraftmaschine mit einer Dampfkreisprozessvorrichtung ist aus der DE 10 2009 035 522 A1 bekannt. Dort ist in die Dampfkreisprozessvorrichtung ein Dampfspeicher integriert, in dem Dampf in Zeiten, in denen dieser erzeugt aber nicht genutzt werden kann, zwischenspeichert wird. Der gespeicherte Dampf wird dem Dampfkreisprozess wieder zuführt, wenn mehr Dampf umgesetzt werden kann, als durch Nutzung von Abgasabwärme erzeugt werden kann.

Eine weitere alternative Kombination eines Dampfkreisprozess zur Abwärmenutzung aus dem Abgas und eines Wärmespeicher ist aus der DE 10 2011 076 054 A1 bekannt. Dabei ist vorgesehen, den Wärmespeicher in den Dampfkreis zu integrieren und von dem Arbeitsmedium des Dampfkreises beaufschlagen zu lassen. Dazu ist vorgesehen, einen Vorlauf zu dem Wärmespeicher zwischen dem Verdampfer und der Expansionsmaschine und einen Rücklauf zwischen der Expansionsvorrichtung und dem Kondensator in den Dampfkreis zu integrieren. Grundsätzlich soll dadurch die Wärme, die der Wärmespeicher nach einem Kaltstart der Brennkraftmaschine auf das Arbeitsmedium überträgt, in dem Verdampfer auf das Abgas übertragen werden, wodurch die Aufheizzeit für in dem Abgasstrang stromab des Verdampfers angeordnete Abgasnachbehandlungsvorrichtungen verkürzt werden kann. Weiterhin ist in der DE 10 2011 076 054 A1 offenbart, dass alternativ oder zusätzlich zu dem Aufwärmen des Abgases in der Warmlaufphase auch vorgesehen sein kein, dass die Abwärme aus dem Kondensator die Warmlaufphase der Brennkraftmaschine dadurch verkürzt, dass der Kondensator von dem Kühlmittel des Motorkühlkreises gekühlt wird, wodurch sich das Kühlmittel erwärmt. Bei einer derartigen Nutzung des Arbeitsmediums kann auch vorgesehen sein, mittels einer Druckeinstelleinrichtung den Druck des Arbeitsmediums derart einzustellen, dass die Dampfphase temporär eliminiert wird und das Arbeitsmedium im gesamten Kreislauf in flüssiger Form zirkuliert.

Aus der WO2010/048100 A2 ist eine Antriebseinheit gemäß dem Oberbegriff des Anspruchs 1 bekannt. Und schließlich ist aus der US 2011/094227 A1 ein System zur Umwandlung von Wärmeenergie in elektrische Energie bekannt sein, bei dem Abwärme einer Kraftmaschine, beispielsweise einer Verbrennungskraftmaschine oder einer Gasturbine, eines Kraftwerks, auf zwei rechtsläufig arbeitende-Kreisprozessvorrichtungen übertragen wird. Dabei wird in einem der rechtsläufigen Kreisprozesse, einem Hochtemperatur-Kreisprozess, Abwärme des Abgases der Kraftmaschine und in dem anderen rechtsläufigen Kreisprozess, dem Niedertemperatur-Kreisprozess, Abwärme eines Kühlsystems der Kraftmaschine genutzt.

Ausgehend von diesem Stand der Technik lag der Erfindung die Aufgabe zugrunde, die Abwärme einer Brennkraftmaschine eines Kraftfahrzeugs besser auszunutzen.

Diese Aufgabe wird durch eine Antriebseinheit gemäß dem unabhängigen Patentanspruch 1 gelöst. Vorteilhafte Ausgestaltungen davon sind Gegenstand der abhängigen Patentansprüche und ergeben sich aus der nachfolgenden Beschreibung der Erfindung.

Eine gattungsgemäße Antriebseinheit für ein Kraftfahrzeug umfasst:
- eine Brennkraftmaschine, die einen Verbrennungsmotor sowie einen Abgasstrang, über den Abgas aus dem Verbrennungsmotor abführbar ist, aufweist und
- eine Kreisprozessvorrichtung, die zur Wandlung von in dem Abgas enthaltener Wärmeenergie in einem rechtsläufigen thermodynamischen Kreisprozess in mechanische Arbeit einsetzbar ist, wobei der rechtsläufige Kreisprozess
   - einen (direkten oder indirekten) Wärmeübergang von dem Abgas auf ein Arbeitsmedium in einer ersten Wärmetauschvorrichtung umfasst, wodurch die Temperatur und/oder der Druck des Arbeitsmediums erhöht wird,
   - eine Expansion des Arbeitsmediums in einer Expansionsvorrichtung zur Erzeugung der mechanischen Arbeit umfasst, und
   - einen Wärmeübergang von dem Arbeitsmedium auf ein Kühlmittel in einer zweiten Wärmetauschvorrichtung umfasst,

Eine solche gattungsgemäße Antriebseinheit ist erfindungsgemäß dadurch weitergebildet, dass die Kreisprozessvorrichtung zusätzlich einen Verdichter, der alternativ zu der Expansionsvorrichtung einsetzbar ist, und eine Drossel umfasst, so dass diese auch in einem linksläufigen thermodynamischen Kreisprozess einsetzbar ist, wobei ein (direkter oder indirekter) Wärmeübergang von dem Abgas auf das Arbeitsmedium oder ein (direkter oder indirekter) Wärmeübergang von dem Kühlmittel auf das Arbeitsmedium erfolgt. Die Kreisprozessvorrichtung kann somit insbesondere als Wärmepumpe eingesetzt werden.

Die erfindungsgemäße Ausgestaltung einer Antriebseinheit ermöglicht, insbesondere nach der Beendigung des Betriebs der Brennkraftmaschine beispielsweise nach einem Stillstand des Kraftfahrzeugs, die in verschiedenen Komponenten der Antriebseinheit gespeicherte Wärmeenergie zu nutzen.

Demnach kann insbesondere vorgesehen sein, dass die Kreisprozessvorrichtung im Betrieb des Verbrennungsmotors in einem rechtsläufigen Kreisprozess und im Stillstand des Verbrennungsmotors in einem linksläufigen Kreisprozess betreibbar ist bzw. zumindest temporär mittels einer entsprechenden Steuerung betrieben wird.

Die in den Komponenten gespeicherte Wärmeenergie kann nach Beendigung des Betriebs der Brennkraftmaschine insbesondere dazu genutzt werden, eine Beheizung eines Innenraums des Kraftfahrzeugs fortzusetzen. Dann kann beispielsweise vorgesehen sein, dass in dem linksläufigen Kreisprozess ein (direkter oder indirekter) Wärmeübergang von dem Abgasstrang auf das Arbeitsmedium und von dem Arbeitsmedium (direkt oder indirekt) auf Luft für eine Klimatisierung des Innenraums des Kraftfahrzeugs erfolgt. Insbesondere kann der Wärmeübergang von dem Arbeitsmedium auf die Luft für die Innenraumklimatisierung unter Zwischenschaltung eines Motorkühlkreises erfolgen.

Alternativ oder zusätzlich kann mittels der erfindungsgemäßen Ausgestaltung der Kreisprozessvorrichtung aber auch die in einem Motorkühlkreis gespeicherte Wärmeenergie vorteilhaft genutzt werden. Hierzu sollte dann vorgesehen sein, dass die zweite Wärmetauschvorrichtung in den Motorkühlkreis des Verbrennungsmotors integriert ist.

Während des Betriebs der Kreisprozessvorrichtung in dem rechtsläufigen Kreisprozess würde dann die Abwärme des Kreisprozesses, die einen Großteil (z.B. ca. 85%) der zugeführten Wärmeenergie darstellen kann, somit an den Motorkühlkreis abgegeben werden. Damit können weitere Vorteile verbunden sein. Zum einen kann dadurch die Abwärme des rechtsläufigen Kreisprozesses über einen Kühler, insbesondere den Hauptkühler des Kraftfahrzeugs, an die Umgebungsluft abgeführt werden. Auf einen zusätzlichen Kühler für die Kreisprozessvorrichtung kann dadurch verzichtet werden. Dabei kann insbesondere vorgesehen sein, dass die Wärmeenergie stromab des Verbrennungsmotors in den Motorkühlkreis übertragbar ist. Dazu kann zumindest ein Wärmetauscher der zweiten Wärmetauschvorrichtung (direkt oder über Zuleitungen) an dieser Stelle in den Motorkühlkreis integriert sein. Dadurch wird verhindert, dass die aus der Kreisprozessvorrichtung in den Motorkühlkreis überführte Wärmeenergie die Kühlleistung für den Verbrennungsmotor negativ beeinflusst. Zum anderen ermöglicht diese Ausgestaltung der erfindungsgemäßen Antriebseinheit, dass in bestimmten Betriebszuständen, beispielsweise in einer Warmlaufphase nach einem Kaltstart der Brennkraftmaschine, wenn diese (insbesondere das Kühlmittel des Motorkühlkreises oder das Motoröl) noch nicht den vorgesehenen Betriebstemperaturbereich erreicht hat, die Abwärme der Kreisprozessvorrichtung zur schnelleren Erwärmung des Motorkühlkreises (und gegebenenfalls mit dem Motorkühlkreis wärmetauschend verbundener anderer Funktionselemente, z.B. Innenraumheizung, Getriebeöl, Motoröl, etc.) zu erreichen.

Eine Nutzung der in dem Motorkühlkreis gespeicherten Wärmeenergie kann insbesondere dadurch erfolgen, dass die Wärmeenergie zum Aufladen eines Wärmespeichers, der vorzugsweise in die Kreisprozessvorrichtung integriert ist, genutzt wird. Dies kann insbesondere erfolgen, wenn die im Wärmespeicher gespeicherte Wärmemenge unterhalb eines definierten Grenzwerts liegt. Demnach kann vorgesehen sein, dass in dem linksläufigen Kreisprozess ein (direkter oder indirekter) Wärmeübergang von dem Arbeitsmedium auf den Wärmespeicher erfolgt.

Der Wärmespeicher kann wiederum dazu dienen, den rechtsläufigen Kreisprozess zu unterstützen, insbesondere in einer Warmlaufphase der Brennkraftmaschine nach einem Kaltstart oder bei einem relativ lange andauernden Betrieb der Brennkraftmaschine mit geringer Last und entsprechend geringer Abgastemperatur. Dazu ist vorteilhafterweise vorgesehen, dass die Integration des Wärmespeichers derart vorgesehen ist, dass in dem rechtsläufigen Kreisprozess ein (direkter oder indirekter) Wärmeübergang von dem Wärmespeicher auf das Arbeitsmedium in oder stromauf der ersten Wärmetauschvorrichtung (und stromab der zweiten Wärmetauschvorrichtung) erfolgt.

Sofern die zweite Wärmetauschvorrichtung, wie bevorzugt vorgesehen, zudem in den Motorkühlkreis integriert ist, kann die von dem Wärmespeicher abgegebene Wärme auch vorteilhaft genutzt werden, um beispielsweise die Warmlaufphase der Brennkraftmaschine zu verkürzen. Dies kann durch die schnellere Erwärmung des Arbeitsmediums mittels des Wärmespeichers, die in der zweiten Wärmetauschvorrichtung wiederum auf den Motorkühlkreis übertragen wird, erreicht werden.

Eine Nutzung der in dem Motorkühlkreis gespeicherten Wärmeenergie kann auch dafür vorgesehen sein, ein bestimmtes Temperaturniveau des (Ab-)Gases im Abgasstrang auch im Nichtbetrieb der Brennkraftmaschine zeitweise aufrecht zu halten. Dies kann beispielsweise im andauernden Stop-and-Go-Betrieb des Kraftfahrzeugs mit einem regelmäßig wechselnden Betrieb der Brennkraftmaschine, z.B. mittels einer Start-Stopp-Automatik, ein Auskühlen einer der ersten Wärmetauschvorrichtung nachgeschalteten Abgasnachbehandlungsvorrichtung verhindern.

Der Wärmespeicher kann auch in den Abgasstrang integriert sein und keine Wärmekoppelung zu der Kreisprozessvorrichtung aufweisen. Der Wärmespeicher kann dann beispielsweise dafür eingesetzt werden, nach einem Kaltstart der Brennkraftmaschine oder bei einem Betrieb der Brennkraftmaschine mit dauerhaft geringen Lasten und entsprechend geringen Abgastemperaturen ein schnelles Erreichen oder ein Aufrechterhalten eines Betriebstemperaturbereichs einer bezogen auf den Wärmespeicher stromab in den Abgasstrang integrierter Abgasnachbehandlungseinrichtung zu ermöglichen.

Bevorzugt kann vorgesehen sein, dass der rechtsläufige Kreisprozess ein Dampfkreisprozess, insbesondere ein Clausius-Rankine-Prozess ist, bei dem das Arbeitsmedium im flüssigen Zustand mittels einer Pumpe druckerhöht wird, in der ersten Wärmetauschvorrichtung verdampft und vorzugsweise überhitzt wird und in dem zweiten Wärmetauscher kondensiert. Dann kann eine bevorzugt vorgesehene Integration des Wärmetauschers in die Kreisprozessvorrichtung, bei der der Wärmeübergang von dem Wärmespeicher auf das Arbeitsmedium in oder stromauf der ersten Wärmetauschvorrichtung erfolgt, dazu genutzt werden, das Verdampfen des Arbeitsmediums sicher zu stellen, auch wenn die von dem Abgas übertragene Wärmeenergie dafür noch nicht ausreichend ist. Dadurch wird die teilweise Umwandlung der Wärmeenergie in mechanische Arbeit in der Expansionsvorrichtung ermöglicht. Um dies zu erreichen, ist der Wärmespeicher vorzugsweise derart ausgestaltet, dass die Entladungstemperatur, d.h. die Temperatur des Arbeitsmediums, die durch den Wärmeübergang von dem Wärmespeicher bei den im übrigen herrschenden Bedingungen erreichbar ist, oberhalb der Verdampfungstemperatur des Arbeitsmediums liegt.

In einer bevorzugten Ausgestaltung der erfindungsgemäßen Antriebseinheit für ein Kraftfahrzeug kann vorgesehen sein, dass der Verdichter und die Expansionsvorrichtung integral ausgebildet sind, d.h. beide Funktionen von einer Maschine erfüllt werden können. Dabei kann es sinnvoll oder notwendig sein, die Flussrichtung des Arbeitsmediums in den beiden Kreisprozessen umzukehren. Gleiches kann dann auch für über die erste und zweite Wärmetauschvorrichtung mit der Kreisprozessvorrichtung wärmetauschend verbundene weitere Kreisläufe sinnvoll sein, um zu ermöglichen, die entsprechenden Wärmetauscher stets im Gegenstrom zu betreiben. Alternativ kann aber auch vorgesehen sein, dass der Verdichter und die Expansionsvorrichtung separat ausgebildet und parallel geschaltet sind.

Da die Pumpe gegebenenfalls nur im rechtsläufigen Kreisprozess und die Drossel gegebenenfalls nur im linksläufigen Kreisprozess eingesetzt werden, kann vorteilhaft vorgesehen sein, dass diese in der Kreisprozessvorrichtung parallel geschaltet sind. Dadurch kann verhindert werden, dass diese den jeweiligen anderen Kreisprozess negativ beeinflussen.

In einer weiterhin bevorzugten Ausgestaltung der erfindungsgemäßen Antriebseinheit mit in die Kreisprozessvorrichtung integriertem Wärmespeicher kann vorgesehen sein, dass die Kreisprozessvorrichtung einen Bypass umfasst, durch den die Expansionsvorrichtung im rechtsläufigen Kreisprozess umgehbar ist. Dies kann insbesondere vorteilhaft sein, wenn die Entladungstemperatur des Wärmespeichers (zeitweise) unterhalb der Verdampfungstemperatur des Arbeitsmediums liegt. Dann ist zwar die Durchführung des rechtsläufigen Dampfkreisprozesses eventuell nicht möglich, jedoch kann die Kreisprozessvorrichtung als Transferkreis genutzt werden, um die Wärmeenergie aus dem Wärmespeicher und/oder dem Abgas an das Kühlmittel des Motorkühlkreises zu übertragen. Die Verwendung des Bypasses kann auch sinnvoll sein, wenn eine Umwandlung von thermischer in mechanische Energie mittels der Kreisprozessvorrichtung nicht gewünscht oder erforderlich ist.

Um zu verhindern, dass der Wärmeentzug aus dem Abgas durch die Kreisprozessvorrichtung ein schnelles Aufheizen oder den korrekten Betrieb einer Abgasnachbehandlungseinrichtung (z.B. Katalysator(en) und/oder Partikelfilter) behindert, kann vorzugsweise vorgesehen sein, dass ein Wärmetauscher der ersten Wärmetauschvorrichtung hinter der Abgasnachbehandlungseinrichtung in den Abgasstrang integriert ist.

Neben einer direkten Nutzung der Wärmeenergie des Abgases durch eine Anordnung eines Wärmetauschers in dem Abgasstrom kann alternativ oder zusätzlich auch eine indirekte Nutzung der Abgaswärmeenergie vorgesehen sein. Hierzu kann die erste Wärmetauschvorrichtung beispielsweise (weitere) erste Wärmetauscher umfassen, die an Komponenten (z.B. Abgaskrümmer, Kühler einer (Hochdruck- oder Niederdruck-) Abgasrückführung, Kühler für die Turbine eines Abgasturboladers) des Abgasstrangs (ggf. auch des Motorkühlkreises, dessen Wärmeenergie auch aus dem Abgas stammt) angeordnet sind.

Mehrere Wärmetauscher der ersten Wärmetauschvorrichtung lassen sich vorteilhaft kombinieren, wenn die erste Wärmetauschvorrichtung neben den mehreren ersten Wärmetauschern, (mindestens) einen zweiten Wärmetauscher sowie (mindestens) einen Zwischenkreis mit einem Transfermedium umfasst, wobei in dem rechtsläufigen Kreisprozess in zumindest einem der ersten Wärmetauscher Wärmeenergie von dem Abgas auf das Transfermedium und in dem zweiten Wärmetauscher Wärmeenergie von dem Transfermedium auf das Arbeitsmedium übergeht. Der Zwischenkreis kann dabei insbesondere auch noch eine Pumpe zum Umwälzen des Transfermediums und/oder einen Ausgleichsbehälter aufweisen. Ein weiterer Vorteil eines solchen Zwischenkreises kann darin liegen, dass das Arbeitsmedium vor zu hohen Temperaturen des Abgases oder der von dem Abgas erhitzten Komponenten geschützt wird. Der Zwischenkreis kann somit als thermischer Dämpfer und auch Puffer fungieren.

Bei einer Ausgestaltung der ersten Wärmetauschvorrichtung mit einem Zwischenkreis kann besonders vorteilhaft vorgesehen sein, dass der Wärmespeicher in den Zwischenkreis integriert ist. Dabei kann weiterhin bevorzugt auch ein Bypass des Zwischenkreises vorgesehen sein, durch den der Wärmespeicher bedarfsweise umgehbar ist.

Um eine Überdimensionierung der Kreisprozessvorrichtung und damit einen schlechten Wirkungsgrad bei Teillastbetrieb zu vermeiden, kann vorzugsweise vorgesehen sein, dass die Maximalleistung der Kreisprozessvorrichtung im rechtsläufigen Kreisprozess auf den Abgaswärmestrom bei einem Betrieb des Verbrennungsmotors bei Teillast ausgelegt ist. Da die Verbrennungsmotoren heutiger Kraftfahrzeuge die meiste Zeit bei Teillast betrieben werden, kann dann ein guter Wirkungsgrad für die Kreisprozessvorrichtung erreicht werden. Wird der Verbrennungsmotor dagegen zeitweise bei oder nahe der Volllast betrieben, kann die dann zusätzliche Wärmeenergie des Abgases, die von der Kreisprozessvorrichtung nicht umsetzbar ist, in dem Zwischenspeicher gespeichert werden, um diesen (wieder) aufzuladen.

Bei dem Wärmespeicher kann es sich vorzugsweise um einen Latentwärmespeicher oder einen thermochemischen Speicher handeln. Latentwärmespeicher sind Vorrichtungen, die thermische Energie mit vielen Wiederholzyklen und/oder über lange Zeit speichern können. Man nutzt dazu häufig sogenannte Phasenwechselmaterialien (PCM: "phase change materials"), deren latente Schmelzwärme, Lösungswärme oder Absorptionswärme wesentlich größer ist als die Wärme, die sie aufgrund ihrer normalen spezifischen Wärmekapazität (ohne den Phasenumwandlungseffekt) speichern können. Thermochemische Speicher nutzen die Enthalpie reversibler chemischer Reaktionen, z.B. von auf Chemisorption beruhenden Absorptions- und Desorptionsprozessen.

In einer weiterhin bevorzugten Ausgestaltung der erfindungsgemäßen Antriebsvorrichtung kann vorgesehen sein, dass eine Vorrichtung zur Prognostizierung eines zukünftig zu fahrenden Fahrtprofils des Kraftfahrzeugs vorgesehen ist, wobei im rechtsläufigen Kreisprozess eine Steuerung des Wärmeübergangs auf die Kreisprozessvorrichtung und/oder den Wärmespeicher und/oder eine Wärmeabgabe von dem Wärmespeicher in Abhängigkeit von dem prognostizierten Fahrprofil erfolgt.

Die Vorrichtung zur Prognostizierung kann insbesondere ein Navigationssystem umfassen. Ein Navigationssystem umfasst eine insbesondere satellitengestützte Vorrichtung zur Positionserkennung sowie auswertbare geographische Kartendaten. Derartige Kartendaten können dabei nicht nur einen Streckenverlauf umfassen, sondern insbesondere auch Informationen zu der Art der jeweiligen Streckenabschnitte (Autobahn, Landstraße, Stadtstraße, etc.) sowie zu den dort herrschenden Geschwindigkeitsbeschränkungen aufweisen. Auch können topographische Daten vorgesehen sein, die insbesondere eine Ermittlung der Steigung oder des Gefälles der Streckenabschnitte ermöglichen. Diese Daten können, insbesondere in Kombination mit dem derzeitigen Fahrverhalten (z.B. aktuelle Geschwindigkeit, Durchschnittsgeschwindigkeit, jeweils insgesamt und auf den unterschiedlichen Straßenarten, etc.) ausgewertet werden und dadurch der zukünftige Lastzustand der Brennkraftmaschine über der Zeit und somit das entsprechende Abwärmeangebot prognostiziert werden. Dieses kann dann möglichst optimal ausgenutzt werden, indem z.B. nur der Kreisprozessvorrichtung, nur dem Wärmespeicher oder, z.B. bei derzeitigem und voraussichtlich weiter andauerndem Betrieb der Brennkraftmaschine mit hoher oder Volllast, beiden Komponenten Abwärme zugeführt wird. Auch kann in Abhängigkeit des prognostizierten Abwärmeangebots vorgesehen sein, weder der Kreisprozessvorrichtung noch dem Wärmespeicher Abwärme zuzuführen, beispielsweise um eine Erhöhung des Abgasgegendrucks, den diese durch eine Integration in den Abgasstrang bewirken können, temporär zu vermeiden.

Weiterhin bevorzugt kann vorgesehen sein, dass die Vorrichtung zur Prognostizierung einen Fahrtenprotokollierer umfasst. Mittels des Fahrtenprotokollierers können regelmäßige Fahrten, wie beispielsweise wochentägliche Fahrten zur und von der Arbeitsstelle, vorausgesagt werden, deren voraussichtliche Fahrtprofile (u.a. Streckenverlauf, Geschwindigkeitsprofil) dann bekannt sind.

Diesbezüglich kann die Vorrichtung zur Prognostizierung eines zukünftig zu fahrenden Fahrtprofils auch eine Verknüpfung mit einem Dauerkalender oder einem insbesondere online aktualisierbaren Kalender umfassen, wodurch Feiertage und Wochenenden, an denen eine Fahrt zur Arbeitsstelle nicht zu erwarten ist, berücksichtigt werden.

Der Fahrtenprotokollierer kann auch personenbezogene Daten speichern und auswerten. Hierzu kann der Fahrtenprotokollierer die protokollierten Fahrtprofile beispielsweise den einzelnen, individuell konfigurierbaren und damit regelmäßig bestimmten Fahrern zugeordneten Fahrzeugschlüsseln zuordnen.

Der Fahrtenprotokollierer kann insbesondere auch das vergangene individuelle Fahrverhalten des jeweiligen Fahrers auf der aktuellen Fahrt auswerten und zur Prognostizierung des zukünftigen Fahrverhaltens auf dieser Fahrt (ggf. nur kurzzeitig unterbrochen) auswerten.

Eine Kombination einer Vorrichtung zur Prognostizierung des zukünftigen Fahrtprofils mit der erfindungsgemäßen Möglichkeit, die Kreisprozessvorrichtung auch in einem linksläufigen Kreisprozess zu nutzen, kann besondere Vorteile aufweisen. So kann beispielsweise vorgesehen sein, auf ein Aufladen des Wärmespeichers während der Fahrt zu verzichten, wenn ein kurzfristiges Fahrtende, gegebenenfalls in Verbindung mit einem längeren Stillstand, prognostiziert ist und somit ein Aufladen des Wärmespeichers auch durch eine Nutzung der im Abgasstrang und/oder im Motorkühlkreis gespeicherten Energie erfolgen kann.

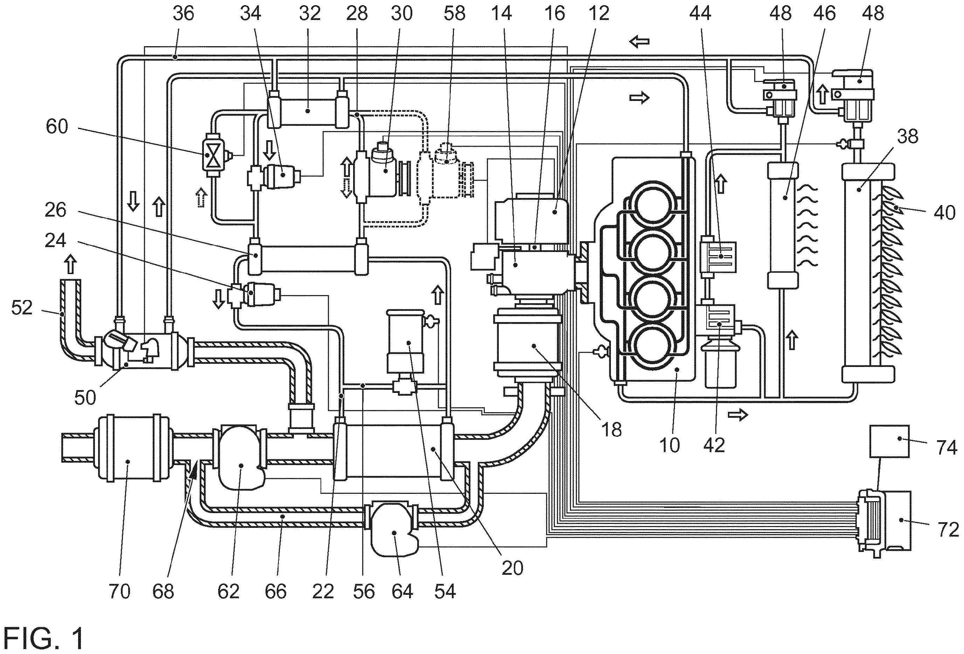

Die Erfindung wird im Folgenden anhand eines in der Zeichnung dargestellten Ausführungsbeispiels näher erläutert. Die Zeichnung zeigt in
- Fig. 1:: in einer schematischen Darstellung eine erfindungsgemäße Antriebseinheit für ein Kraftfahrzeug.

Die in der Fig. 1 dargestellte Antriebseinheit für ein Kraftfahrzeug umfasst eine Brennkraftmaschine mit einem Verbrennungsmotor 10, der beispielsweise als vierzylindriger Hubkolben-Diesel-Verbrennungsmotor ausgebildet ist. In dem Verbrennungsmotor 10 sind somit vier Zylinder ausgebildet, in denen jeweils ein Kolben beweglich gelagert ist. Die Kolben bilden mit den Wänden des dazugehörigen Zylinders jeweils einen Brennraum aus, in dem verdichtetes Frischgas (Luft) mit direkt eingespritztem Kraftstoff verbrannt wird.

Das Frischgas wird dem Verbrennungsmotor über einen zum Großteil nicht dargestellten Frischgasstrang zugeführt. Die Verdichtung des Frischgases erfolgt dabei über den Verdichter 12 eines Abgasturboladers.

Das bei der Verbrennung des Frischgases mit dem Kraftstoff entstehende Abgas wird über einen Abgasstrang aus dem Verbrennungsmotor 10 abgeführt. Dabei durchströmt das Abgas zunächst eine Turbine 14 des Abgasturboladers, die mit dem Verdichter 12 über eine Welle 16 verbunden ist, und anschließend eine erste Abgasnachbehandlungseinrichtung 18, wie beispielsweise einen Katalysator. Stromab der ersten Abgasnachbehandlungseinrichtung 18 ist ein erster Wärmetauscher 20 einer ersten Wärmetauschvorrichtung einer Kreisprozessvorrichtung in den Abgasstrang integriert.

Der erste Wärmetauscher 20 wird zum einen von dem Abgas und zum anderen von einem flüssigen Transfermedium eines Zwischenkreises 22 der Kreisprozessvorrichtung durchströmt, wobei ein Wärmeübergang von dem Abgas auf das Transfermedium erfolgen kann. Mittels einer Medienpumpe 24 des Zwischenkreises 22 wird das Transfermedium gefördert. Dadurch gelangt das von dem Abgas erwärmte Transfermedium zum einen in einen als Verdampfer ausgebildeten zweiten Wärmetauscher 26 der ersten Wärmetauschvorrichtung. Der Verdampfer wird zum einen von dem Transfermedium und zum anderen von einem Arbeitsmedium eines Arbeitskreises 28 der Kreisprozessvorrichtung durchströmt. Dabei kann ein Wärmeübergang von dem Transfermedium auf das Arbeitsmedium erfolgen. Dieser Wärmeübergang kann zu einem Verdampfen und Überhitzen des Arbeitsmedium in dem Verdampfer führen. In einem rechtsläufigen Kreisprozess der Kreisprozessvorrichtung kann der überhitzte Dampf dann in einer Expansionsvorrichtung 30 expandiert werden, wobei mechanische Leistung erzeugt wird, die zur Erzeugung von elektrischer Energie und/oder zum direkten mechanischen Antrieb des Kraftfahrzeugs oder von Nebenaggregaten der Brennkraftmaschine eingesetzt werden kann. In einer zweiten Wärmetauschvorrichtung der Kreisprozessvorrichtung, die in dem vorliegenden Ausführungsbeispiel lediglich einen als Kondensator ausgebildeten Wärmetauscher 32 umfasst, wird das Arbeitsmedium dann abgekühlt und wieder in die flüssige Phase überführt

(kondensiert). Eine Medienpumpe 34 des Arbeitskreises 28 sorgt dann für das erneute Zuführen des flüssigen Arbeitsmediums zu dem Verdampfer.

Der Kondensator wird neben dem Arbeitsmedium auch von dem flüssigen Kühlmittel eines Motorkühlkreises 36 durchströmt, wobei während des rechtsläufigen Kreisprozesses ein Wärmeübergang von dem Arbeitsmedium auf das Kühlmittel erfolgt. Die Abwärme des rechtsläufigen Kreisprozesses kann somit insbesondere über einen Hauptkühler 38 der Antriebsvorrichtung an die Umgebungsluft abgegeben werden. Dabei kann die Menge der durch den Hauptkühler 38 strömenden Umgebungsluft mittels verstellbarer Kühlerlamellen 40 automatisch gesteuert werden.

Zusätzlich dazu kann die Abwärme des rechtsläufigen Kreisprozesses in dem Motorkühlkreis 36 auch dazu genutzt werden, das Kühlmittel nach einem Kaltstart der Brennkraftmaschine schneller auf Betriebstemperatur zu bringen oder die Betriebstemperatur in Betriebsphasen des Verbrennungsmotors 10 mit geringen Lasten möglichst zu halten. Dadurch kann ein Abfall der Temperatur des Verbrennungsmotors 10 sowie weiterer Komponenten, wie beispielsweise eines Motorölkühlers 42 (und damit des Motoröls) und eines Getriebeölkühlers 44 (und damit des Getriebeöls) vermieden werden. Auch kann die Abwärme des rechtsläufigen Kreisprozesses zur Verbesserung einer Heizwirkung einer Heizungsanlage für einen Innenraum des Kraftfahrzeugs genutzt werden. Hierzu ist ein Wärmetauscher 46 der Heizungsanlage in den Motorkühlkreis 36 integriert.

Über eine entsprechende Ansteuerung von zwei in den Motorkühlkreis 36 integrierten Kühlmittelpumpen 48 sowie von nicht dargestellten Ventilen kann bedarfsangepasst der Durchfluss von Kühlmittel durch einzelne Komponenten des Motorkühlkreises 36 geregelt werden. Insbesondere kann während der Warmlaufphase nach einem Kaltstart und bei einem anhaltenden Betrieb des Verbrennungsmotors 10 mit sehr geringen Lasten eine Kühlung des Kühlmittels im Hauptkühler 38 unterbunden werden, wodurch die Betriebstemperatur des Kühlmittels möglichst schnell erreicht oder beibehalten werden kann.

Das Kühlmittel des Motorkühlkreises 36 durchströmt weiterhin einen Kühler 50 einer Niederdruckabgasrückführung 52. Die Niederdruckabgasrückführung 52 zweigt stromab des ersten Wärmetauschers 20 der ersten Wärmetauschvorrichtung aus dem Abgasstrang ab. Mittels Ventilen ist es möglich, die Durchströmung des Kühlers 50 der Niederdruckabgasrückführung 52 mengenmäßig zu regeln, wobei das Kühlmittel dann mehr oder weniger über den Kondensator der Kreisprozessvorrichtung geführt wird.

Die Antriebsvorrichtung umfasst weiterhin einen Wärmespeicher 54, der in einen Bypass 56 des Zwischenkreises 22 zur möglichen Umgehung des ersten Wärmetauschers 20 integriert ist. Der als Latentwärmespeicher ausgebildete Wärmespeicher 54 kann Wärmeenergie aus dem Transfermedium aufnehmen, über einen langen Zeitraum speichern und bei Bedarf wieder an das Transfermedium abgegeben. Insbesondere kann vorgesehen sein, dass der Wärmespeicher Wärmeenergie aus dem Transfermedium aufnimmt, wenn der Verbrennungsmotor 10 mit hohen Lasten betrieben wird. Die dann in dem ersten Wärmetauscher 20 von dem Abgas auf das Transfermedium übertragbare Wärmeenergie kann dann größer sein, als die in dem rechtsläufigen Kreisprozess umsetzbare Wärmeenergie. Die überschüssige Wärmeenergie kann vorteilhaft zum "Aufladen" des Wärmespeichers 54 eingesetzt werden.

Wird der Verbrennungsmotor 10 dagegen in der Warmlaufphase oder mit niedrigen Lasten betrieben, kann die in dem ersten Wärmetauscher 20 auf das Transfermedium übertragene Wärmeenergie geringer sein, als die im rechtsläufigen Kreisprozess umsetzbare Wärmeenergie. Insbesondere kann diese Wärmeenergie so gering sein, dass diese für das Verdampfen und Überhitzen des Arbeitsmediums im Verdampfer nicht ausreicht. Dann kann durch eine entsprechende Ansteuerung des Wärmespeichers 54 die darin gespeicherte Wärmeenergie zunächst an das Transfermedium und dann im Verdampfer an das Arbeitsmedium übertragen werden. Dadurch kann der rechtsläufige Kreisprozess unterstützt oder sogar erst ermöglicht werden.

Sofern die von dem Wärmespeicher 54 und/oder dem Abgas auf das Transfermedium übertragene Wärmeenergie zu gering ist, um das Verdampfen des Arbeitsmediums zu gewährleisten, kann der Arbeitskreis 28 auch als Transferkreis genutzt werden, so dass dann zwar kein rechtsläufiger Kreisprozess durchgeführt wird und dementsprechend von der Expansionsvorrichtung 30 auch keine mechanische Leistung erzeugt wird, jedoch weiterhin ein Übergang von Wärmeenergie von dem Abgas und/oder dem Wärmespeicher 54 auf das Kühlmittel des Motorkühlkreises 36 erfolgen kann. Um zu verhindern, dass dabei die ungenutzte Expansionsvorrichtung 30 von dem dann als Transfermedium dienenden Arbeitsmedium durchströmt werden muss, kann ein nicht dargestellter Bypass zur Umgehung der Expansionsvorrichtung 30 vorgesehen sein.

Die Kreisprozessvorrichtung ist derart ausgebildet, dass diese auch in einem linksläufigen Kreisprozess und insbesondere als Wärmepumpe betrieben werden kann. Dazu ist entweder die Expansionsvorrichtung 30 derart ausgebildet, dass diese auch als Verdichter arbeiten kann, oder ein separater Verdichter 58 ist zu der Expansionsvorrichtung 30 parallel geschaltet in den Arbeitskreis 28 integriert (vgl. gestrichelte Darstellung in der Fig. 1). Weiterhin umfasst der Arbeitskreis 28 eine Drossel 60, die zu der Medienpumpe 34 parallel geschaltet ist.

Während ein Betrieb der Kreisprozessvorrichtung in einem rechtsläufigen Kreisprozess primär während des Betriebs des Verbrennungsmotors 10 vorgesehen ist, um den kontinuierlichen Wärmestrom des Abgases zu nutzen, ist ein Betrieb als Wärmepumpe insbesondere dann vorgesehen, wenn der Verbrennungsmotor 10 nicht mehr in Betrieb ist. Dadurch wird ermöglicht die in verschiedenen Komponenten der Antriebsvorrichtung noch gespeicherte Wärmeenergie weiter zu nutzen.

Insbesondere kann vorgesehen sein, die in dem Wärmespeicher 54 und/oder in dem noch warmen Abgasstrang gespeicherte Wärmeenergie für einen fortgesetzten Heizbetrieb der Innenraumheizung zu verwenden. Hierzu wird das Arbeitsmedium in dem Arbeitskreis 28 von dem von dem Wärmespeicher 54 und/oder dem Abgas erwärmten Transfermedium in dem Verdampfer auf Unterdruckniveau verdampft, dann im Verdichter verdichtet und auf einem höheren Temperaturniveau im Kondensator unter Wärmeübergang auf das Kühlmittel kondensiert und mittels der Drossel 60 auf den unteren Prozessdruck entspannt. Dabei ist vorgesehen, dass die Strömungsrichtung in dem Arbeitskreis 28 identisch zu derjenigen bei einem Betrieb in einem rechtsläufigen Kreisprozess ist (durchgezogene Pfeile im Arbeitskreis).

Weiterhin kann vorgesehen sein, dass die in dem Motorkühlkreis 28 und insbesondere in dem Kühlmittel gespeicherte Wärmeenergie dazu genutzt wird, den Wärmespeicher 54 nach dem Abstellen des Verbrennungsmotors 10 wieder aufzuladen. Hierzu wird das Arbeitsmedium in dem Arbeitskreis 28 in dem Wärmetauscher 32 der zweiten Wärmetauschvorrichtung (im rechtsläufigen Kreisprozess der Kondensator) durch Wärmeübergang von dem "Kühlmittel" auf einem Unterdruckniveau verdampft, dann in der als Verdichter arbeitenden Expansionsvorrichtung 30 oder in dem Verdichter 58 verdichtet und auf einem höheren Temperaturniveau in dem zweiten Wärmetauscher 26 der ersten Wärmetauschvorrichtung (im rechtsläufigen Kreisprozess der Verdampfer) unter Wärmeabgabe auf das Transfermedium kondensiert und mittels der Drossel 60 auf den unteren Prozessdruck entspannt. Von dem erwärmten Transfermedium kann dann ein Wärmeübergang auf den Wärmespeicher 54 erfolgen, um diesen aufzuladen. Dabei ist vorgesehen, dass die Strömungsrichtung in dem Arbeitskreis 28 umgekehrt zu derjenigen bei einem Betrieb während des rechtsläufigen Kreisprozesses ist (gestrichelte Pfeile im Arbeitskreis). Um einen Betrieb der als Verdichter arbeitenden Expansionsvorrichtung 30 oder des Verdichters 58 bei beiden Strömungsrichtungen zu ermöglichen, kann vorgesehen sein, dessen Saug- und Druckseiten mittels einer geeigneten Ventilschaltung (nicht dargestellt) umzukehren. Um ein Erreichen des unteren Prozessdrucks sicherzustellen kann vorgesehen sein, eine Unterdruckpumpe (nicht dargestellt) in den Arbeitskreis 28 zu integrieren.

Der Abgasstrang umfasst noch eine erste Abgasklappe 62, die stromab des ersten Wärmetauschers 20 und der Abzweigung der Niederdruckabgasrückführung 52 in einen Hauptstrang des Abgasstrangs integriert ist, sowie eine zweite Abgasklappe 64, die in einen den ersten Wärmetauscher 20, die Abzweigung der Niederdruckabgasrückführung 52 und die erste Abgasklappe 62 umgehenden Bypass 66 integriert ist. Mittels der Abgasklappen 62, 64 ist es möglich, den Abgasstrom über den Bypass 66 bei Bedarf an dem ersten Wärmetauscher 20 und der Niederdruckabgasrückführung 52 teilweise oder vollständig vorbei zu leiten. Dies kann insbesondere erfolgen, wenn nach einem Kaltstart zunächst ein stromab auch der Zuführmündung 68 des Bypasses 66 angeordnete zweite Abgasnachbehandlungseinrichtung 70 (z.B. ein Dieselpartikelfilter) möglichst schnell auf Betriebstemperatur gebracht werden soll oder wenn der teilweise erhebliche Abgasgegendruck, den insbesondere der erste Wärmetauscher 20 bewirken kann, temporär vermieden werden soll.

Sämtliche ansteuerbare Komponenten der Antriebsvorrichtung werden von einem Motorsteuergerät 72 angesteuert. Diese sind somit vorzugsweise elektrisch ansteuer- und betätigbar ausgestaltet, können aber auch pneumatisch oder hydraulisch betätigt sein, wozu elektrisch ansteuerbare, pneumatisch oder hydraulisch wirkende Aktoren vorgesehen sein können.

Die Ansteuerung der Komponenten von dem Motorsteuergerät 72 kann in Abhängigkeit von Signalen eines Navigationssystems 74 der Antriebsvorrichtung bzw. des Kraftfahrzeugs erfolgen. Dadurch kann u.a. in Abhängigkeit von einem prognostizierten Fahrtprofil vorgesehen sein, den Wärmespeicher 54 zu laden oder zu entladen, um eine möglichst optimale Nutzung der Wärmeenergie des Abgases zu erreichen.

### Bezugszeichenliste

- 10: Verbrennungsmotor
- 12: Verdichter des Abgasturboladers
- 14: Turbine des Abgasturboladers
- 16: Welle des Abgasturboladers
- 18: erste Abgasnachbehandlungseinrichtung
- 20: erster Wärmetauscher der ersten Wärmetauschvorrichtung
- 22: Zwischenkreis
- 24: Medienpumpe des Zwischenkreises
- 26: zweiter Wärmetauscher der ersten Wärmetauschvorrichtung
- 28: Arbeitskreis
- 30: Expansionsvorrichtung
- 32: Wärmetauscher der zweiten Wärmetauschvorrichtung
- 34: Medienpumpe des Arbeitskreises
- 36: Motorkühlkreis
- 38: Hauptkühler
- 40: Lamellen
- 42: Motorölkühler
- 44: Getriebeölkühler
- 46: Wärmetauscher der Heizungsanlage
- 48: Kühlmittelpumpe
- 50: Kühler der Niederdruckabgasrückführung
- 52: Niederdruckabgasrückführung
- 54: Wärmespeicher
- 56: Bypasses des Zwischenkreises
- 58: Verdichter des Arbeitskreises
- 60: Drossel
- 62: erste Abgasklappe
- 64: zweite Abgasklappe
- 66: Bypass des Abgasstrangs
- 68: Zuführmündung
- 70: zweite Abgasnachbehandlungseinrichtung
- 72: Motorsteuergerät
- 74: Navigationssystem

## Patentansprüche

1. Antriebseinheit für ein Kraftfahrzeug mit
- einer Brennkraftmaschine, die einen Verbrennungsmotor (10) sowie einen Abgasstrang, über den Abgas von dem Verbrennungsmotor (10) abführbar ist, umfasst,
- einer Kreisprozessvorrichtung, die zur Wandlung der in dem Abgas enthaltenen Wärmeenergie in einem rechtsläufigen thermodynamischen Kreisprozess in mechanische Arbeit einsetzbar ist, wobei der rechtsläufige Kreisprozess
- einen Wärmeübergang von dem Abgas auf ein Arbeitsmedium in einer ersten Wärmetauschvorrichtung (20, 26) umfasst, wodurch die Temperatur und/oder der Druck des Arbeitsmediums erhöht wird,
- eine Expansion des Arbeitsmediums in einer Expansionsvorrichtung (30) zur Erzeugung der mechanischen Arbeit umfasst, und
- einen Wärmeübergang von dem Arbeitsmedium auf ein Kühlmittel in einer zweiten Wärmetauschvorrichtung (32) umfasst
**dadurch gekennzeichnet, dass** die Kreisprozessvorrichtung zusätzlich einen Verdichter (58), der alternativ zu der Expansionsvorrichtung (30) einsetzbar ist, und eine Drossel (60) umfasst, so dass diese in einem linksläufigen thermodynamischen Kreisprozess einsetzbar ist, wobei ein Wärmeübergang von dem Abgas auf das Arbeitsmedium oder ein Wärmeübergang von dem Kühlmittel auf das Arbeitsmedium erfolgt.

2. Antriebseinheit gemäß Anspruch 1, **dadurch gekennzeichnet, dass** der rechtsläufige Kreisprozess ein Dampfkreisprozess ist, wobei das Arbeitsmedium im flüssigen Zustand mittels einer Pumpe druckerhöht wird, in der ersten Wärmetauschvorrichtung (20, 26) verdampft und in der zweiten Wärmetauschvorrichtung (32) kondensiert, wobei die Pumpe alternativ zu der Drossel (60) einsetzbar ist.

3. Antriebseinheit gemäß Anspruch 1 oder 2, **dadurch gekennzeichnet, dass** der Verdichter (58) und die Expansionsvorrichtung (30) parallel geschaltet sind und/oder die Pumpe und die Drossel (60) parallel geschaltet sind.

4. Antriebseinheit gemäß einem der vorhergehenden Ansprüche, **dadurch gekennzeichnet, dass** der Verdichter und die Expansionsvorrichtung (30) integral ausgebildet sind.

5. Antriebseinheit gemäß einem der vorhergehenden Ansprüche, **gekennzeichnet durch** einen Wärmespeicher (54), der in die Kreisprozessvorrichtung integriert ist.

6. Antriebseinheit gemäß einem der vorhergehenden Ansprüche, **dadurch gekennzeichnet, dass** die erste Wärmetauschvorrichtung einen ersten Wärmetauscher (20) und einen zweiten Wärmetauscher (26) sowie einen Zwischenkreis (22) mit einem Transfermedium umfasst, wobei in dem ersten Wärmetauscher (20) Wärmeenergie von dem Abgas auf das Transfermedium und in dem zweiten Wärmetauscher (26) Wärmeenergie von dem Transfermedium auf das Arbeitsmedium übergeht.

7. Antriebseinheit gemäß Anspruch 5 und 6, **dadurch gekennzeichnet, dass** der Wärmespeicher (54) in den Zwischenkreis (22) intergiert ist.

8. Antriebseinheit gemäß einem der vorhergehenden Ansprüche, **dadurch gekennzeichnet, dass** der Wärmeübergang in der zweiten Wärmetauschvorrichtung (32) auf ein Kühlmittel eines Motorkühlkreises (36) des Verbrennungsmotors (10) erfolgt.

9. Antriebseinheit gemäß einem der vorhergehenden Ansprüche, **dadurch gekennzeichnet, dass** die Kreisprozessvorrichtung während des Betriebs des Verbrennungsmotors (10) in einem rechtsläufigen Kreisprozess und im Stillstand des Verbrennungsmotors (10) in dem linksläufigen thermodynamischen Kreisprozess betreibbar ist.

10. Antriebseinheit gemäß einem der vorhergehenden Ansprüche, **dadurch gekennzeichnet, dass** in dem linksläufigen Kreisprozess ein Wärmeübergang von dem Abgasstrang und/oder dem Wärmespeicher (54) auf Luft für eine Klimatisierung eines Innenraums des Kraftfahrzeugs oder ein Wärmeübergang von dem Kühlmittel eines Motorkühlkreises (36) auf den Abgasstrang und/oder den Wärmespeicher (54) erfolgt.

## Claims

1. Drive unit for a motor vehicle having
- an internal combustion engine which comprises a combustion engine (10) and an exhaust gas section, via which exhaust gas can be discharged from the combustion engine (10),
- a cycle process apparatus which can be used for the conversion of the thermal energy which is contained in the exhaust gas into mechanical work in a clockwise thermodynamic cycle process, the clockwise cycle process
- comprising a thermal transfer from the exhaust gas to a working medium in a first heat exchanging apparatus (20, 26), as a result of which the temperature and/or the pressure of the working medium are/is increased,
- comprising an expansion of the working medium in an expansion apparatus (30) for the generation of the mechanical work, and
- comprising a thermal transfer from the working medium to a coolant in a second heat exchanging apparatus (32),
**characterized in that** the cycle process apparatus additionally comprises a compressor (58), which can be used as an alternative to the expansion apparatus (30), and a throttle (60), with the result that it can be used in a counterclockwise thermodynamic cycle process, a thermal transfer taking place from the exhaust gas to the working medium, or a thermal transfer taking place from the coolant to the working medium.

2. Drive unit according to Claim 1, **characterized in that** the clockwise cycle process is a steam cycle process, the working medium being pressurized in the liquid state by means of a pump, evaporating in the first heat exchanging apparatus (20, 26), and condensing in the second heat exchanging apparatus (32), it being possible for the pump to be used as an alternative to the throttle (60).

3. Drive unit according to Claim 1 or 2, **characterized in that** the compressor (58) and the expansion apparatus (30) are connected in parallel, and/or the pump and the throttle (60) are connected in parallel.

4. Drive unit according to one of the preceding claims, **characterized in that** the compressor and the expansion apparatus (30) are of integral configuration.

5. Drive unit according to one of the preceding claims, **characterized by** a heat accumulator (54) which is integrated into the cycle process apparatus.

6. Drive unit according to one of the preceding claims, **characterized in that** the first heat exchanging apparatus comprises a first heat exchanger (20), a second heat exchanger (26) and an intermediate circuit (22) with a transfer medium, thermal energy transferring from the exhaust gas to the transfer medium in the first heat exchanger (20), and thermal energy transferring from the transfer medium to the working medium in the second heat exchanger (26).

7. Drive unit according to Claims 5 and 6, **characterized in that** the heat accumulator (54) is integrated into the intermediate circuit (22).

8. Drive unit according to one of the preceding claims, **characterized in that** the thermal transfer in the second heat exchanging apparatus (32) takes place to a coolant of an engine cooling circuit (36) of the combustion engine (10).

9. Drive unit according to one of the preceding claims, **characterized in that** the cycle process apparatus can be operated in a clockwise cycle process during the operation of the combustion engine (10) and can be operated in the counterclockwise thermodynamic cycle process at a standstill of the combustion engine (10).

10. Drive unit according to one of the preceding claims, **characterized in that**, in the counterclockwise cycle process, a thermal transfer takes place from the exhaust gas section and/or the heat accumulator (54) to air for climate control of an interior of the motor vehicle, or a thermal transfer takes place from the coolant of an engine cooling circuit (36) to the exhaust gas section and/or the heat accumulator (54).

## Revendications

1. Unité d'entraînement pour un véhicule automobile, comprenant
- un moteur à combustion interne qui comporte un moteur thermique (10) ainsi qu'une ligne d'échappement par le biais de laquelle les gaz d'échappement peuvent être évacués du moteur thermique (10),
- un dispositif à cycle qui peut être utilisé pour la conversion en travail mécanique de l'énergie thermique contenue dans les gaz d'échappement, dans un cycle thermodynamique dans le sens horaire, le cycle dans le sens horaire
- comportant un transfert de chaleur des gaz d'échappement à un fluide de travail dans un premier dispositif d'échange de chaleur (20, 26), de telle sorte que la température et/ou la pression du fluide de travail soient augmentées,
- comportant une détente du fluide de travail dans un dispositif de détente (30) pour produire le travail mécanique, et
- comportant un transfert de chaleur du fluide de travail à un liquide de refroidissement dans un deuxième dispositif d'échange de chaleur (32), **caractérisée en ce que** le dispositif à cycle comporte en outre un compresseur (58) qui peut être utilisé en alternative au dispositif de détente (30), et un étrangleur (60), de telle sorte que ceux-ci peuvent être utilisés dans un cycle thermodynamique dans le sens anti-horaire, un transfert de chaleur des gaz d'échappement au fluide de travail ou un transfert de chaleur du liquide de refroidissement au fluide de travail ayant lieu.

2. Unité d'entraînement selon la revendication 1, **caractérisée en ce que** le cycle dans le sens horaire est un cycle de vapeur, le fluide de travail à l'état liquide étant soumis à une augmentation de pression au moyen d'une pompe, vaporisé dans le premier dispositif d'échange de chaleur (20, 26) et condensé dans le deuxième dispositif d'échange de chaleur (32), la pompe pouvant être utilisée en alternative à l'étrangleur (60).

3. Unité d'entraînement selon la revendication 1 ou 2, **caractérisée en ce que** le compresseur (58) et le dispositif de détente (30) sont montés en parallèle et/ou la pompe et l'étrangleur (60) sont montés en parallèle.

4. Unité d'entraînement selon l'une quelconque des revendications précédentes, **caractérisée en ce que** le compresseur et le dispositif de détente (30) sont réalisés d'un seul tenant.

5. Unité d'entraînement selon l'une quelconque des revendications précédentes, **caractérisée par** un accumulateur de chaleur (54) qui est intégré dans le dispositif à cycle.

6. Unité d'entraînement selon l'une quelconque des revendications précédentes, **caractérisée en ce que** le premier dispositif d'échange de chaleur comporte un premier échangeur de chaleur (20) et un deuxième échangeur de chaleur (26) ainsi qu'un circuit intermédiaire (22) doté d'un fluide de transfert, de l'énergie thermique passant des gaz d'échappement au fluide de transfert dans le premier échangeur de chaleur (20) et de l'énergie thermique passant du fluide de transfert au fluide de travail dans le deuxième échangeur de chaleur (26).

7. Unité d'entraînement selon la revendication 5 ou 6, **caractérisée en ce que** l'accumulateur de chaleur (54) est intégré dans le circuit intermédiaire (22).

8. Unité d'entraînement selon l'une quelconque des revendications précédentes, **caractérisée en ce que** le transfert de chaleur à un liquide de refroidissement d'un circuit de refroidissement (36) du moteur thermique (10) a lieu dans le deuxième dispositif d'échange de chaleur (32).

9. Unité d'entraînement selon l'une quelconque des revendications précédentes, **caractérisée en ce que** le dispositif à cycle peut fonctionner dans un cycle dans le sens horaire pendant le fonctionnement du moteur thermique (10) et peut fonctionner dans le cycle thermodynamique dans le sens anti-horaire à l'arrêt du moteur thermique (10).

10. Unité d'entraînement selon l'une quelconque des revendications précédentes, **caractérisée en ce que** dans le cycle dans le sens anti-horaire a lieu un transfert de chaleur de la ligne d'échappement et/ou de l'accumulateur de chaleur (54) à de l'air pour une climatisation d'un espace intérieur du véhicule automobile ou un transfert de chaleur du liquide de refroidissement d'un circuit de refroidissement de moteur (36) à la ligne d'échappement et/ou à l'accumulateur de chaleur (54).
